# EUROPEAN PATENT APPLICATION

(11) **EP 2 933 904 A1**
(43) Date of publication of application: **21.10.2015**
(21) Application number: 12889962.2
(22) Date of filing: 11.12.2012
(51) Int. Cl.: H02K 5/10, H02K 9/02

(54) **DRAINAGE SYSTEM FOR ELECTRIC MACHINES, AND ELECTRIC MACHINES COMPRISING SAME**

(71) Applicant: Weg Equipamentos Elétricos S.A. - Motores, 89256-900 Jaragua do Sul - SC (BR)
(72) Inventor: CASSIANO ANTUNES, Cezário, CEP:89252-260 Jaraguá do Sul - SC (BR); THIAGO SCHWINDEN, Leal, CEP:89259-120 Jaraguá do Sul - SC (BR)
(74) Representative: Stöckeler, Ferdinand
(86) International application number: PCT/BR2012/000512
(87) International publication number: WO 2014/089645

(57) **Abstract**

This invention discloses a drainage system with high protection degree and low cost applicable to closed-type electrical machines and an electrical machine using thereof, comprising a casing equipped with:
- a drainage body (1) with a roughly cylindrical geometry, but capable of assuming other geometrical forms, manufactured from an impermeable material equipped with one or more holes (3) positioned over said body (1), forming one or more internal and cross-section channels (7) coupled to the drainage hole (8) of the casing (2) in communication with the internal part (A) of the casing (2) with the external part (B) of the casing (2) ;
- a plurality of cross-section filaments (4) are positioned in the hole or holes (3), crossing longitudinally the channel or channels (7) and said filaments (4) may be equipped with length superior to the drainage body length (1).

## Description

### FIELD OF APPLICATION

This invention patent application discloses a drainage system of high protection degree and low cost applicable to closed-type electrical machines, performing its function automatically without any intervention for removing the condensate from inside the casing of the electrical machine and at the same time preventing the entry of liquid and solid particles from the external mean to the inside of the electrical machine.

### BACKGROUND OF THE INVENTION

One very important aspect for electrical machines is the fact that it must present a reduced number of interventions for maintenance. In this sense, a requirement in the sizing of electrical machines relates to the more suitable protection casing against the entry of solid particles and liquids, once their presence may lead to the electrical performance reduction (for example, lubrication compromised) or also in failures by mechanical wear.

In this way, the project of the electrical machine must contemplate the operational conditions of the place in which this will be installed; in the case of the steps related to the mining production chain, for example, it is recommended the equipment have total protection against solid particles and liquid jets.

The protection degree classification of an electrical machine is performed through its capacity of preventing the entry of solid particles (in this case, the parameter used will be the size thereof) and liquids (direct or indirect jets, droplets or partial or complete submersion). However, due to the temperature variation in the internal/external part of the casing there is a renewal of gas, usually air, inside the electrical machine. During this renewal process of the gas, and depending of the type thereof, it is common that this transportation has humidity. Due to the temperature variation between the external mean and the casing, and for the given combinations of this range, the humidity present in the gas may start to precipitate in the form of liquid droplets that will be housed inside the electrical machine, if there is no drainage system that allows the liquid to be displaced to the external mean. The difficulty resides in the fact that the presence of an opening to this liquid exit would allow the entry of solid particles and/or liquids into the Casing internal part. Another option would be the fact of the casing is conceived for not allowing the presence of drains. However, a need of performing periodic hand operations would exist for removing the condensate inside the casing; this fact becomes an undesirable limit regarding the machine functioning rendering a functioning regime for long periods of time.

### DESCRIPTION OF THE STATE OF THE ART

In the state of the art, it is noted that there is a series of proposals aiming to overcome the limitations previously described. One relatively common limitation consists of drains remaining closed during the machine operation and need human intervention for effectively perform its function. One illustrative example is disclosed in the document US5747904 that described a drainage plug applied to electrical engines comprising a body substantially cylindrical in thread shape, equipped with internal radial cavities outlining a plurality of flowing routes.

The document US4978875 discloses a drainage device applicable to start-up engines of tubular body comprising internally a labyrinthine structure equipped with a wall of reduced thickness. Such configuration allows said device to rotate according to the applied water pressure. According to the applicant, such fact constitutes an advantage over the common devices by preventing spatially the drained water from returning inside the engine and constituting an advance over the devices as that described in the document JP275958. However, it is important to note that the purpose disclosed in US4978875 does not present advantages regarding the manufacturing cost of the common pieces, requiring steps of additional machining for internal projections that will form the labyrinth of the tubular body. A negative point also is the torsion region itself whose wall presents reduced thickness; the continuous deformation of the piece may lead to more pronounced wearing, reducing its lifetime.

The document US2002/0023686 discloses a drainage tube comprising a rubber body and a plastic connecting element; its lower end presents a plurality of openings for water drainage, extending laterally and opposed to each other alongside the tube body.

The document US2012/0104888 describes a drainage structure whose member of drainage presents a fitting portion to the engine casing consisting of a pair of hooks, being said hooks equipped with flexing proximal portions, reducing the distances between the distal portions and fixing them in the internal surface of the casing hole. From the same principle, JP2009-114940 discloses a drainage tube comprising hooks associated to its base, aiming to increase the mechanic strength of the device when subjected to strong jets of water.

The document JP3032337 discloses a flexible drainage tube equipped with internal cavity presenting alternate projections, and an inclinable distal end, with the water outlet opening.

The document JP2011-103730 discloses a drainage cap inserted in the drainage hole being constituted of an internal and external cylinder, joint through a connection plate.

Another approach comprises the use of drains with sintered material, composed of metallic particles or compact ceramics forming a porous structure to prevent dust particles and water from entering inside the engine casing. Even though of being showed as efficient regarding the drainage, they show a high manufacturing cost, besides being susceptible to frequent blocks.

In this sense, it is noted from what was previously exposed, in the present state of the art there is no trustful solution, which keeps the low production costs without losing the component liability.

### OBJECTIVE OF THE INVENTION

Thus, the present invention aims to solve the disadvantages in the state of the art, disclosing a drainage system with high protection degree against solid particles and liquids without the need of human intervention and reduction of costs of production and of the component itself.

### BRIEF DESCRIPTION OF THE FIGURES

Figure 1 illustrates a cross-section side view of the drainage body.
Figure 2 illustrates a cross-section side view of a system incorporation.
Figure 3 illustrates a cross-section side view of another system incorporation.
Figure 4 outlines the functioning of the now proposed system.
Figure 5 illustrates a perspective lower view of the system.

### DETAILED DESCRIPTION OF THE INVENTION

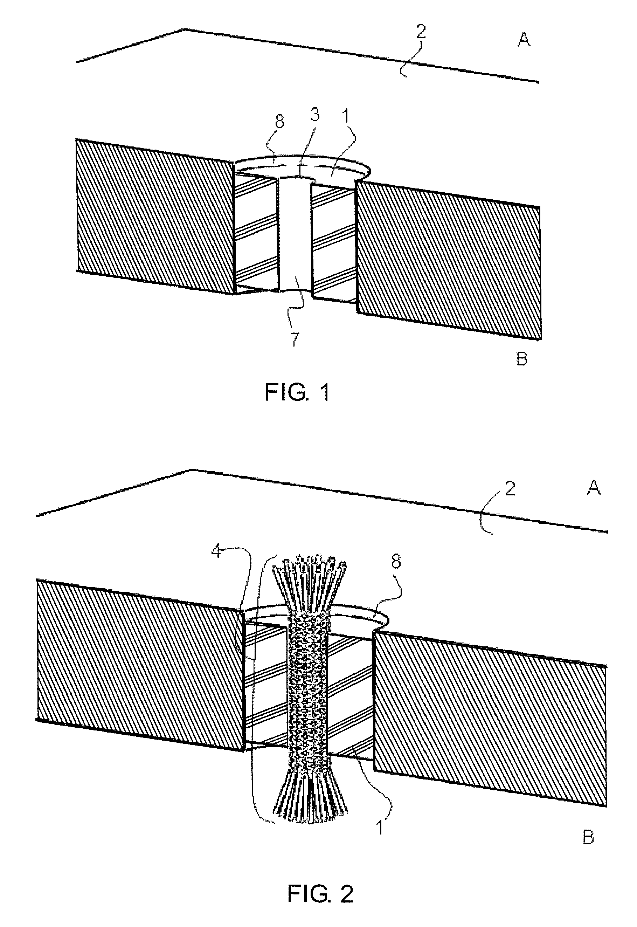

According to the Figures 1 and 2, the drainage system comprises a drainage body (1) coupled to the drainage hole (8) of the casing (2). The body (1) is manufactured from an impermeable material, being equipped with a hole (3) positioned centrally over the body (1), forming a hollow cross-section internal channel (7), which will allow the communication of the internal part (A) of the casing with the external part (B) of the casing (2). In a preferred embodiment, the drainage body (1) must present a cylindrical geometry, with dimensions compatible with the hole (3) and the channel (7). Some examples of materials used for manufacturing the body (1) may be plastic, rubber or metallic material.

A plurality of filaments (4) is positioned in the hole (3), crossing longitudinally the channel (7) so that conducting the liquid to the external part of the casing (2), in the direction (A) to (B).

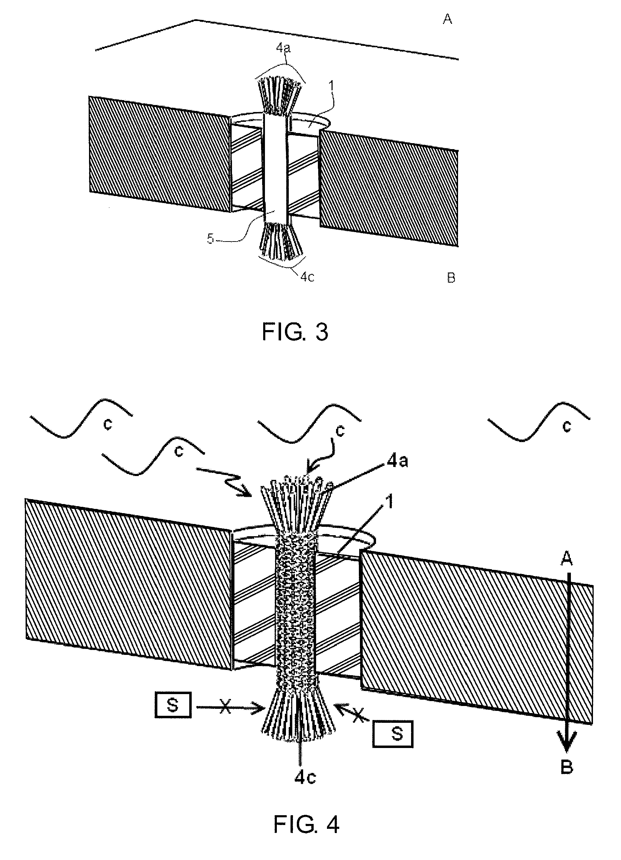

Figure 3 presents a system cut, in a preferred embodiment in which the filaments (4) are found interlocked. Another embodiment comprises the use of non-twisted filaments (4). The structure of the filaments (4) will function as filtrating element, preventing the penetration of solid particles and the entry of liquid inside the casing (2). The filaments or bristles (4) may be composed of natural fibers (such as cotton, jute, sisal, linen or silk) or synthetics (such as nylon, polyethylene, polypropylene, polyester or carbon fibers). The central hole diameter (3) must be slightly smaller than the total diameter of the filament assembly (4) as to allow its steady positioning, but it may assume the dimension equal to the filaments assembly (4), since it is fixed by a binder. Optionally the filament can be involved by an aglet (5) in such a way as to facilitate the mounting process.

Figure 4 illustrates the filaments assembly (4) involved by the aglet (5), spanning over the body (1). The filaments (4) must be positioned in a transversal way and must present length superior to the body (1) and the aglet (5) length.

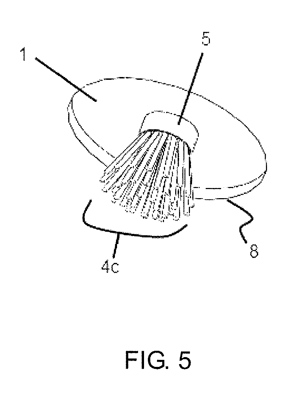

Figure 5 illustrates a scheme of the developed drainage system in the vertical drainage position. The condensate fluid (C) present in the region (A) interacts with the upper portion (4a) of the filaments assembly (4). Then, the condensate (C) is eliminated in the lower portion (4C) of the filaments (4) and finally led to the external part (B) of the casing. The particles (S) are removed in the filaments (4), preventing that the first ones contact the internal portion (A).

Figure 6 represents the lower portion (4C) of the said filaments (4) in communication with the external part (B) of the casing. The lower portion (4C) prevents the entry of foreign solid particles (S) into the system, in parallel with the fluid excess dispensation (C) present in the internal region (A) of the casing. The upper and lower portions (4A) and (4C) respectively, are formed from the filaments (4) ends, the said filaments (4) compressed by the internal walls of the channel (7) of the drainage body (1). For such reason, both portions (4A) and (4C) protrude opened in a conic way.

Currently, several engines with high protection degree, classification IP66 according to the International Electrotechnical Commission (IEC), present closed drainage models, which must be opened in periods of time for removing the condensate from inside the casing. The claim that this drain does not need intervention allows the maintenance interval extension of this kind of nature. To test the drain system operation developed in aggressive environments, it was decided to perform the tests using drains of the present invention in severe applications. After a period of seven months in use, the drains were removed from the electrical machines where they were installed and were subjected to a microscopic evaluation, aiming to check the dust deposition over the filtrating element (filaments). After removing the drains from the test sites, filaments regions were evaluated using a microscope in order to note possible evidences of drains blocks. In a previous microscopic observation, all drains presented high concentration of solid particles, inducing the block possibility. However, with a microscopic analysis, it was noted that the solid particles deposition was only superficial and on the outside of the casing. Particles in excess between the filaments were not detected, evidencing that there is no damaged deposition for the proper operation of the drains.

Obviously, it will be realized that other modifications and variations made to this invention are considered inside the scope of this invention, not restricting to what was previously exposed.

## Claims

1. "DRAIN SYSTEM FOR ELECTRICAL MACHINES AND ELECTRICAL MACHINES COMPRISING THEREOF", wherein said machine is equipped with a casing comprising:
- a drainage body (1) manufactured from an impermeable material, said body (1) equipped with at least one hole (3) positioned over the body (1), each hole (3) forming at least one cross-section internal channel (7);
- a plurality of cross-section filaments (4) are positioned in each hole (3), crossing longitudinally each one of the channels (7), said filaments (4) being equipped with length superior to the drainage body length (1);
wherein the body (1) is coupled to the drainage hole (8) of the casing (2) communicating the internal part (A) of the casing (2) with the external part (B) of the casing (2).

2. MACHINE according to the claim 1, wherein the drainage body (1) is manufactured from plastic, rubber or metallic material.

3. MACHINE according to the claim 1, wherein the filaments (4) are interlocked or not interlocked and composed from natural fibers selected among cotton, jute, sisal, linen or silk; or synthetics fibers selected among nylon, polyethylene, polypropylene, polyester or carbon fibers.

4. MACHINE according to the claim 1, wherein the filaments (4) are optionally involved by an aglet (5).

5. DRAIN SYSTEM wherein it comprises the steps of:
a) positioning the machine drainage vertically,
b) interacting the condensate fluid (C) present in the region of the internal part of the casing (A) with the upper portion (4a) of the filaments assembly (4);
c) eliminating the condensate (C) in the lower portion (4C) of the filaments (4) and conduction thereof to the external part (B) of the casing, and
d) retaining in the filaments (4) particles (S) foreign to the system in the internal portion (A) of the casing (2).
